# EUROPEAN PATENT APPLICATION

(11) **EP 2 486 890 A2**
(43) Date of publication of application: **15.08.2012**
(21) Application number: 11747629.1
(22) Date of filing: 23.02.2011
(51) Int. Cl.: A61C 8/00

(54) **ABUTMENT FOR IMPLANT**

(30) Priority: 23.02.2010 KR 20100016217
(71) Applicant: T-Strong Co., Ltd, Gimhae-si, Gyeongsangnam-do 621-801 (KR); Lee, Seung Young, Changwon-Si, Gyeongsangnam-do 641-939 (KR)
(72) Inventor: LEE, Seung Young, Changwon-Si, Gyeongsangnam-do 641-939 (KR)
(74) Representative: Cabinet Plasseraud
(86) International application number: PCT/KR2011/001170
(87) International publication number: WO 2011/105739

(57) **Abstract**

The present invention relates to an abutment for an implant, and more specifically, to an abutment for an implant capable of improving sealing with a fixture through the formation of a groove in a contact portion. The abutment for an implant according to one aspect of the prevent invention comprises a screw portion, a contact portion, and a head portion. The thread of a screw is formed in the screw portion so as to allow the abutment to be inserted into a fixture to be coupled by a screw. The contact portion is tapered at the upper portion of the screw portion so as to be inserted into a tape portion of the fixture to come in contact with the same. The head portion is formed at the upper portion of the contact portion to enable coupling of prosthesis. Particularly, in this case, the contact portion has a plurality of grooves, which are formed along the circumference direction in a region in contact with the tape portion of the fixture, to reinforce adhesion with the tape portion of the fixture. According to the present invention, the local area of the contact portion is modified into grooves in case of fastening with the fixture by providing the abutment having grooves formed in the contact portion. Therefore, sealing effects can be improved by increasing adhesion between the abutment and the fixture.

## Description

### Field of the Invention

The present invention relates to an abutment for an implant. More specifically, the present invention relates to an abutment for an implant capable of improving sealing with a fixture through the formation of a groove in a contact portion.

### Discussion of the Related Art

Dental implant refers to artificial tooth structure formed by implanting an artificial tooth root(s) into a region to replace a missing tooth or a group of missing teeth and fastening the artificial tooth root(s) into alveolar bone and fixing prosthesis or crown to the artificial tooth root(s). Dental implant also refers to a dental procedure comprising the steps described above to form artificial tooth structure. In general, an implant comprises a fixture made of titanium, an abutment of 1-piece type fastened to the fixture, and prosthesis as an artificial teeth fixed to the abutment. Instead of using an abutment of 1-piece type, the implant may employ an abutment of 2-piece type comprising abutment screw which fastens the abutment into the fixture. Whatever structure it may be, the abutment employed should be fixed firmly into a fixture and maintain its original function without developing a gap against the fixture even when a restored teeth receives masticatory force.

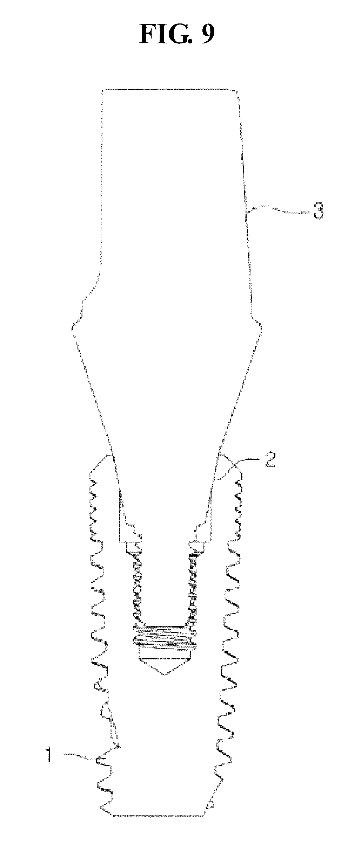

FIG. 9 is assembly structure of a fixture and an abutment of prior art. In general, the engaging portion 5 of the fixture 1 and the abutment 3 forms taper structure. Taper structure has been used since it is the easiest method to implement, providing sufficient durability upon receiving a force by increasing an engaging area between the two components and removing a gap at the time of engaging the two components.

### DETAILE DESCRIPTION OF THE INVENTION

### Technical Problem

Two different surfaces are joined in the case of taper engagement. When two surfaces are joined together, there is always a problem that a gap is developed between contacting surfaces since it is practically impossible to fabricate perfect surfaces. Accordingly, there is inherent weakness in the prior art that prostheses are applied while a gap is already developed from the time of engaging step

The present invention has been made in an effort to solve the problem above. That is, the present invention provides an abutment which can improve a sealing effect by perfecting the engagement with a fixture.

### Technical Solution

The abutment for an implant according to one aspect of the present invention comprises a screw portion, a contact portion, and a head portion. The thread of a screw is formed in the screw portion so as to allow the abutment to be inserted into a fixture to be coupled by a screw. The contact portion is tapered at the upper portion of the screw portion so as to be inserted into a tape portion of the fixture to come in contact with the same. The head portion is formed at the upper portion of the contact portion to enable coupling of a prosthesis. Particularly, in this case, the contact portion has a plurality of grooves, which are formed along the circumference direction in a region in contact with the tape portion of the fixture, to reinforce adhesion with the tape portion of the fixture.

The abutment for an implant according to one aspect of the present invention comprises an anti-rotation portion, a contact portion, and a head portion. The anti-rotation portion is so formed to be inserted into a fixture and prevent rotation relative to the fixture. The contact portion is tapered at the upper portion of the anti-rotation portion so as to be inserted into the tape portion of the fixture to come in contact with the same. The head portion is formed at the upper portion of the contact portion to enable coupling of a prosthesis. Particularly, in this case, the contact portion has a plurality of grooves, which are formed along the circumference direction in a region in contact with the tape portion of the fixture, to reinforce adhesion with the tape portion of the fixture.

In addition, it is preferable for the abutment for an implant that the contact portion has the grooves and forms a protrusion to allow the area of the contact portion coming in contact with the fixture to protrude.

### Advantageous Effects of the Invention

According to the present invention, the local area of the contact portion is modified into grooves in case of fastening with the fixture by providing the abutment having grooves formed in the contact portion. Therefore, sealing effects can be improved by increasing adhesion between the abutment and the fixture.

In addition, according to the present invention, since the grooves are formed in the contact portion of the abutment and the area of the contact portion in contact with the fixture forms a protrusion, sealing effects can be made to be maximized by further increasing adhesion between the abutment and the fixture.

### BRIEF DESCRIPTION OF THE DRAWINGS

The accompany drawings, which are included to provide a further understanding of this document and are incorporated on and constitute a part of this specification illustrate embodiments of this document and together with the description serve to explain the principles of this document.
FIG. 1 is a perspective view of one embodiment of an abutment according to the present invention;
FIG. 2 is a cross sectional view of an embodiment illustrated in FIG. 1;
FIG. 3 is a front view of engagement between the abutment and the fixture illustrated in FIG. 1;
FIG. 4 is a cross sectional view of an embodiment illustrated in FIG. 3;
FIG. 5 is a cross sectional view of another embodiment of an abutment according to the present invention;
FIG. 6 is a cross sectional view of engagement between the abutment and the fixture illustrated in FIG. 5;
FIG. 7 is a perspective view of yet another embodiment of an abutment according to the present invention;
FIG. 8 is a cross sectional view of still another embodiment of an abutment according to the present invention; and
FIG. 9 is a cross sectional view of engagement with an abutment and a fixture in the prior art.

### BEST MODE OF THE INVENTION

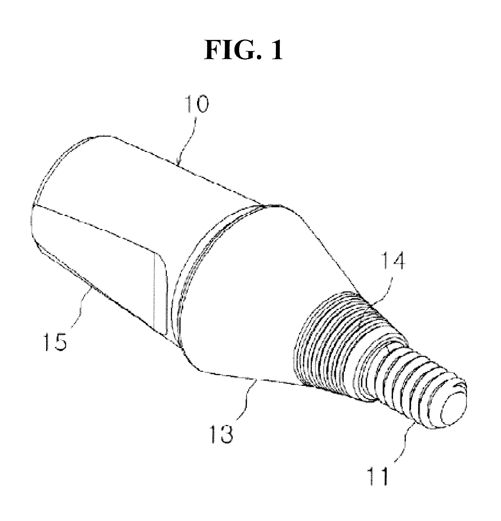

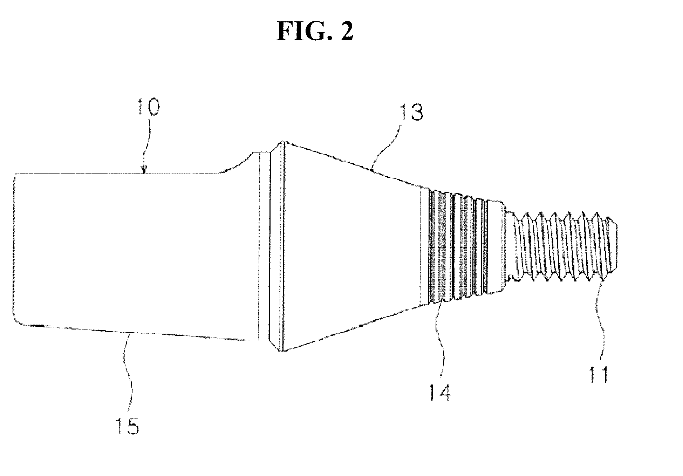

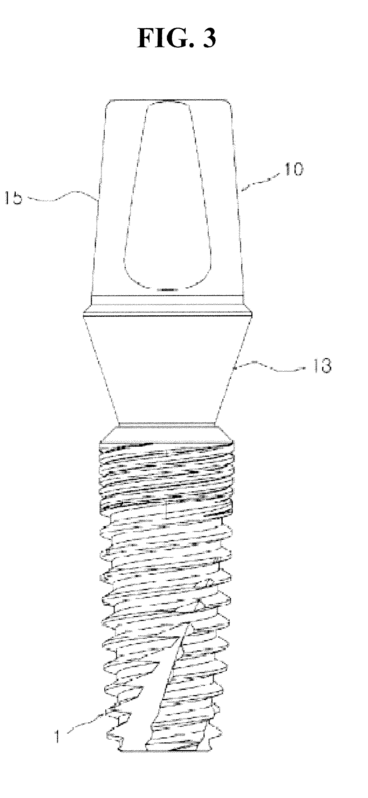

One embodiment of an abutment according to the present invention will be described with reference to FIGS. 1 to 4.

The abutment illustrated in FIGS1 to 4 corresponds to an abutment of 1-piece type. An abutment according to the present invention comprises a screw portion 11, a contact portion 13, and a head portion 15.

The thread of a screw is formed in the screw portion so as to allow the abutment to be inserted into a fixture to be coupled by the screw. The contact portion 13 is tapered at the upper portion of the screw portion 11 so as to be inserted into a tape portion 2 of the fixture 1 to come in contact with the same. At this time, the contact portion 13 has a plurality of grooves 14, which are formed along the circumference direction in a region in contact with the tape portion 2 of the fixture 1, to reinforce the adhesion with the tape portion 2 of the fixture 1. The head portion 15 is formed at the upper portion of the contact portion 13 to enable coupling of a prosthesis.

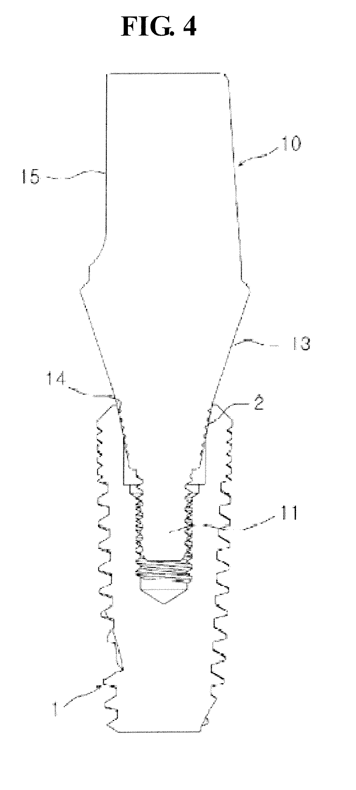

The abutment 10 has a plurality of grooves 14 in the contact portion 13 coming in contact with the fixture 1. As shown in FIG. 4, local areas of the contact portion 13 are modified due to a fastening force at the time of engaging the fixture 1 with the abutment 10. At this time, the modification is developed in the grooves formed at the side part of the contact portion 13, thereby increasing adhesion between the fixture 1 and the abutment 10. Therefore, the abutment 10 and the fixture 1 are sealed completely.

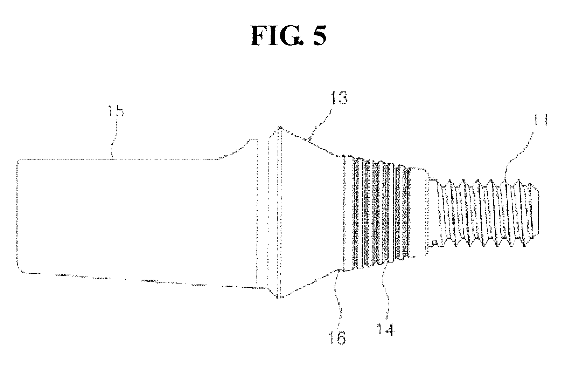

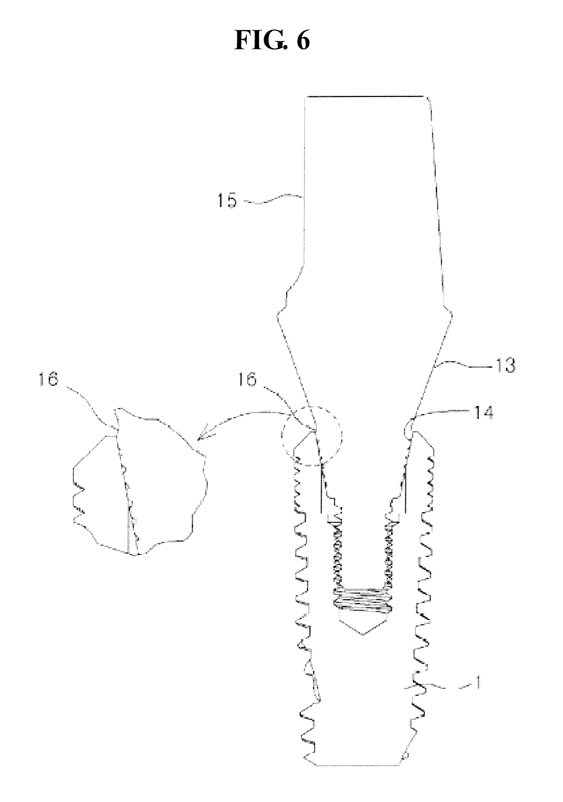

Another embodiment of an abutment according to the present invention will be described with reference to FIGS. 5 and 6.

Different from the abutment of FIG. 1, the contact portion 13 of the abutment shown in FIG. 5 forms a protrusion 16. At this time, grooves 14 are formed in the contact portion 13 so that the area of the contact portion 13 in contact with the fixture 1 protrudes to form a protrusion 16. In other words, the contact portion 13 is tapered in the head portion 15 and forms a protrusion 16 to allow the area coming in contact with the fixture 1 to protrude and tapered again afterwards. Meanwhile, grooves 14 are formed in the area coming in contact with the fixture 1. As described above, adhesion between the fixture 1 and the abutment 10 can be further increased if the area having the grooves 14 protrudes as a protrusion is formed.

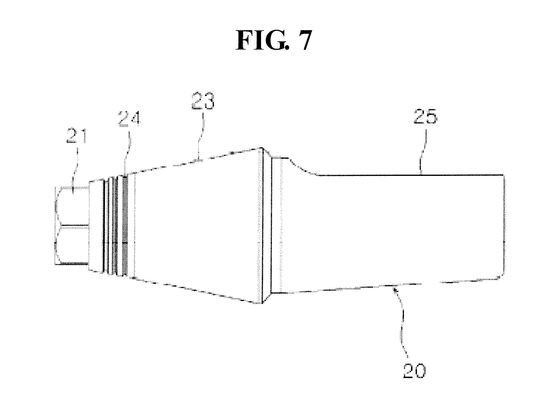

Yet another embodiment of an abutment according to the present invention will be described with reference to FIG. 7. The abutment illustrated in FIG. 7 is an abutment of 2-piece type. An abutment 20 according to the present invention comprises an anti-rotation portion 21, a contact portion 23, and a head portion 25. The anti-rotation portion 21 is so formed to be inserted into a fixture, preventing rotation relative to the fixture. The contact portion 23 is tapered at the upper portion of the anti-rotation portion 21 so as to be inserted into the tape portion of the fixture to come in contact with the same. Particularly, in this case, the contact portion 23 has a plurality of grooves 24, which are formed along the circumference direction in a region in contact with the tape portion of the fixture, to reinforce the adhesion with the tape portion of the fixture. The head portion 25 is formed at the upper portion of the contact portion to enable coupling of a prosthesis. Abutment screw (not shown) is inserted into the abutment 20, engaging the abutment 20 with the fixture. In the same manner as the embodiment of FIG. 1, the grooves 24 formed in the contact portion 23 of the abutment 20 increases adhesion at the time of engagement with the fixture.

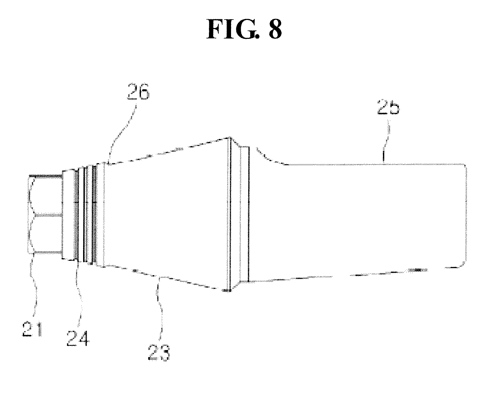

FIG. 8 is a still another embodiment of an abutment according to the present invention. FIGS. 5 and 6 correspond to the case where a protrusion is formed in a contact portion differently from the embodiment of FIG. 1. The embodiment of FIG. 8 illustrates a case where a protrusion is formed in the contact portion of the embodiment of FIG. 7. In other words, the contact portion 23 of the abutment of FIG. 8 has grooves 24 and forms a protrusion 26 to allow the area coming in contact with the fixture to protrude. In this case, adhesion between the fixture and the abutment can be further increased.

## Claims

1. An abutment for an implant, comprising:
a screw portion having screw threads being inserted into a fixture to be coupled by a screw;
a contact portion tapered at the upper portion of the screw portion so as to be inserted into a tape portion of the fixture to come in contact with the same; and
a head portion formed at the upper portion of the contact portion to enable coupling of a prosthesis,
the contact portion having a plurality of grooves, which are formed along the circumference direction in a region in contact with the tape portion of the fixture, to reinforce adhesion with the tape portion of the fixture.

2. An abutment for an implant, comprising:
an anti-rotation portion formed to be inserted into a fixture and preventing rotation relative to the fixture;
a contact portion tapered at the upper portion of the anti-rotation portion so as to be inserted into a tape portion of the fixture to come in contact with the same; and
a head portion formed at the upper portion of the contact portion to enable coupling of a prosthesis,
the contact portion having a plurality of grooves, which are formed along the circumference direction in a region in contact with the tape portion of the fixture, to reinforce adhesion with the tape portion of the fixture.

3. The abutment of claim 1 or 2, wherein the contact portion has the grooves and forms a protrusion so as to protrude an area being in contact with the fixture.
